# EUROPEAN PATENT APPLICATION

(11) **EP 3 291 157 A1**
(43) Date of publication of application: **07.03.2018**
(21) Application number: 17178073.7
(22) Date of filing: 27.06.2017
(51) Int. Cl.: G06Q 20/20, G07G 1/00

(54) **SETTLEMENT PROCESSING APPARATUS**

(30) Priority: 27.06.2016 JP 2016126414
(71) Applicant: Toshiba TEC Kabushiki Kaisha, Tokyo 141-8562 (JP)
(72) Inventor: TERAHARA, Toshiyasu, Shinagawa-ku, Tokyo 141-8562 (JP); ONO, Yasuhiro, Shinagawa-ku, Tokyo 141-8562 (JP); SUZUKI, Shigeaki, Shinagawa-ku, Tokyo 141-8562 (JP)
(74) Representative: Takeuchi, Maya

(57) **Abstract**

A settlement processing apparatus according to an embodiment includes a work table with a first holding area and a second holding area. A first radio tag reader is positioned in the first holding area to read information from a radio tag affixed to an item of merchandise. A second radio tag reader is positioned in the second holding area to read information from a radio tag affixed to an item of merchandise. A processor determines whether a radio tag read by the second radio tag reader was already read by the first radio tag reader. The processor generates a list of merchandise based on the read information obtained by the first and second radio tag readers, and the determination of whether a radio tag read by the second radio tag reader was already read by the first radio tag reader. A display unit displays the generated list.

## Description

### FIELD

The present invention relates to a check-out system or its technology in general, and embodiments described herein relate more particularly to a settlement processing apparatus and a method for settlement processing.

### BACKGROUND

A check-out system may utilize a radio tag such as a radio frequency identification (RFID) tag. In this type of system, a RFID tag is respectively attached to merchandise, and data (hereinafter, referred to as tag data) stored in the RFID tag is read by a tag reader using wireless communication or the like, thereby collecting information of merchandise to be purchased.

In a case where there are a plurality of RFID tags in the communication range of a tag reader, there is a possibility that the tag reader cannot read tag data due to interference caused by simultaneous transmission of tag data from the plurality of RFID tags.

To solve such problems, there is provided a settlement processing apparatus, comprising:
a work table including a first holding area on which a first merchandise storage body is placed and a second holding area on which a second merchandise storage body is placed;
a first radio tag reader positioned in the first holding area and configured to read information from a radio tag affixed to an item of merchandise held in the first merchandise storage body;
a second radio tag reader positioned in the second holding area and configured to read information from a radio tag affixed to an item of merchandise held in the second merchandise storage body;
a display unit; and
a processor configured to:
   determine whether a radio tag affixed to an item of merchandise read by the second radio tag reader was already read by the first radio tag reader,
   generate a list of merchandise held in the second merchandise storage body based on the read information obtained by the first and second radio tag readers, and the determination of whether a radio tag affixed to an item of merchandise read by the second radio tag reader was already read by the first radio tag reader, and
   control the display unit to display the generated list.

In the above apparatus, the first merchandise storage body is preferably a merchandise basket.

In the above apparatus also, the second merchandise storage body is preferably a shopping bag

Suitably, the first merchandise storage body is a first merchandise basket, and
the second merchandise storage body is a second merchandise basket.

Suitably still, the apparatus further comprises:
a partition wall positioned on the work table between the first holding area and the second holding area.

Suitably yet, the generated list includes a check box for each item of merchandise for which the corresponding radio tag is read by the first radio tag reader, and
each check box is checked if the corresponding radio tag is read by the second radio tag reader.

Suitably further, the apparatus further comprises:
a cash processing unit configured to perform cash payment settlement with respect to the items of merchandise included in the generated list, the cash processing unit being detachably connected to the work table.

The invention also relates to a settlement processing method comprising the steps of:
placing a first merchandise storage body with at least one item of merchandise therein on a first holding area of a working table;
with a first radio tag reader positioned in the first holding area, reading information from a radio tag affixed to an item of merchandise held in the first merchandise storage body on which a first merchandise storage body is placed;
moving each of the at least one item of merchandise from the first merchandise storage body to a second merchandise body positioned on a second holding area of the working table;
with a second radio tag reader positioned in the second holding area, reading information from a radio tag affixed to an item of merchandise held in the second merchandise storage body;
determining whether a radio tag affixed to an item of merchandise read by the second radio tag reader was already read by the first radio tag reader;
generating a list of merchandise held in the second merchandise storage body based on the read information obtained by the first and second radio tag readers, and the determination of whether a radio tag affixed to an item of merchandise read by the second radio tag reader was already read by the first radio tag reader; and
controlling a display unit to display the generated list.

In the above method, the first merchandise storage body is preferably a merchandise basket.

In the above method also, the second merchandise storage body is preferably a shopping bag

In the above method further, the first merchandise storage body is preferably a first merchandise basket, and
the second merchandise storage body is preferably a second merchandise basket.

Preferably, a partition wall is positioned on the work table between the first holding area and the second holding area.

Preferably still, the generated list includes a check box for each item of merchandise for which the corresponding radio tag is read by the first radio tag reader, and
each check box is checked if the corresponding radio tag is read by the second radio tag reader.

Preferably yet, the method further comprises:
performing cash payment settlement with respect to the items of merchandise included in the generated list with a cash processing unit detachably connected to the work table.

The invention further relates to a settlement processing method comprising:
with a first radio tag reader positioned in a first holding area of a working table, reading information from a radio tag affixed to an item of merchandise held in the first holding area;
with a second radio tag reader positioned in a second holding area of the working table, reading information from a radio tag affixed to an item of merchandise held in the second holding area;
determining whether a radio tag affixed to an item of merchandise read by the second radio tag reader was already read by the first radio tag reader;
generating a list of merchandise held in the second holding area based on the read information obtained by the first and second radio tag readers, and the determination of whether a radio tag affixed to an item of merchandise read by the second radio tag reader was already read by the first radio tag reader; and
controlling a display unit to display the generated list.

Preferably, a partition wall is positioned on the work table between the first holding area and the second holding area.

Preferably still, the generated list includes a check box for each item of merchandise for which the corresponding radio tag is read by the first radio tag reader, and
each check box is checked if the corresponding radio tag is read by the second radio tag reader.

Preferably yet, the method further comprises:
performing cash payment settlement with respect to the items of merchandise included in the generated list with a cash processing unit detachably connected to the work table.

Typically, the method further comprises:
determining whether a member identification corresponding to a membership is input; and
performing payment settlement with respect to the items of merchandise included in the generated list, wherein the payment settlement includes applying a membership benefit if a member identification corresponding to a membership is determined to have been input.

Typically still, the method further comprises:
measuring a total weight on the first holding area;
determining whether the measured total weight is less than or equal to a predetermined weight; and
if the measured total weight is less than or equal to the predetermined weight, deactivating the second radio tag reader.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a perspective view illustrating an example configuration of a self-checkout apparatus according to a first embodiment.
FIG. 2 is a block diagram of the self-checkout apparatus.
FIGS. 3-6 are flowcharts illustrating an example sequence of operations of the self-checkout apparatus.
FIG. 7 illustrates an example data table.
FIG. 8 illustrates an example card inquiry screen displayed on a touch panel of the self-checkout apparatus.
FIG. 9 illustrates an example settlement screen displayed on the touch panel of the self-checkout apparatus.
FIG. 10 illustrates an example purchase confirmation inquiry screen displayed on the touch panel of the self-checkout apparatus.
FIG. 11 illustrates an example of a registration screen displayed on the touch panel of the self-checkout apparatus.
FIG. 12 illustrates an example a settlement confirmation screen displayed on the touch panel of the self-checkout apparatus.
FIG. 13 is a perspective view illustrating an example configuration of a self-checkout apparatus according to a second embodiment.
FIG. 14 is a perspective view illustrating an example configuration of a self-checkout apparatus according to a third embodiment.

### DETAILED DESCRIPTION

Embodiments provide a settlement processing apparatus capable of detecting all merchandise even when there are multiple radio tags in the communication range of a tag reader.

A settlement processing apparatus according to an embodiment includes a work table with a first holding area on which a first merchandise storage body is placed and a second holding area on which a second merchandise storage body is placed. A first radio tag reader is positioned in the first holding area to read information from a radio tag affixed to an item of merchandise held in the first storage body. A second radio tag reader is positioned in the second holding area to read information from a radio tag affixed to an item of merchandise held in the second merchandise storage body. A processor determines whether a radio tag affixed to an item of merchandise read by the second radio tag reader was already read by the first radio tag reader. The processor generates a list of merchandise held in the second merchandise storage body based on the read information obtained by the first and second radio tag readers, and the determination of whether a radio tag affixed to an item of merchandise read by the second radio tag reader was already read by the first radio tag reader. A display unit displays the generated list.

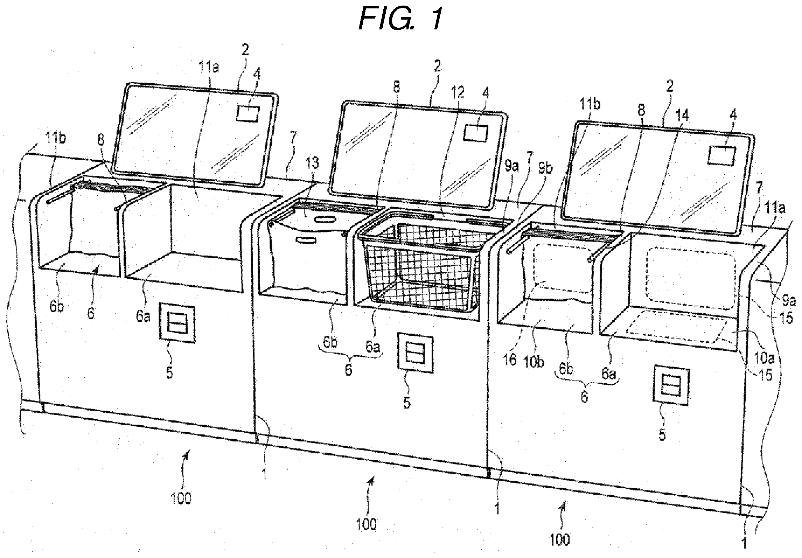

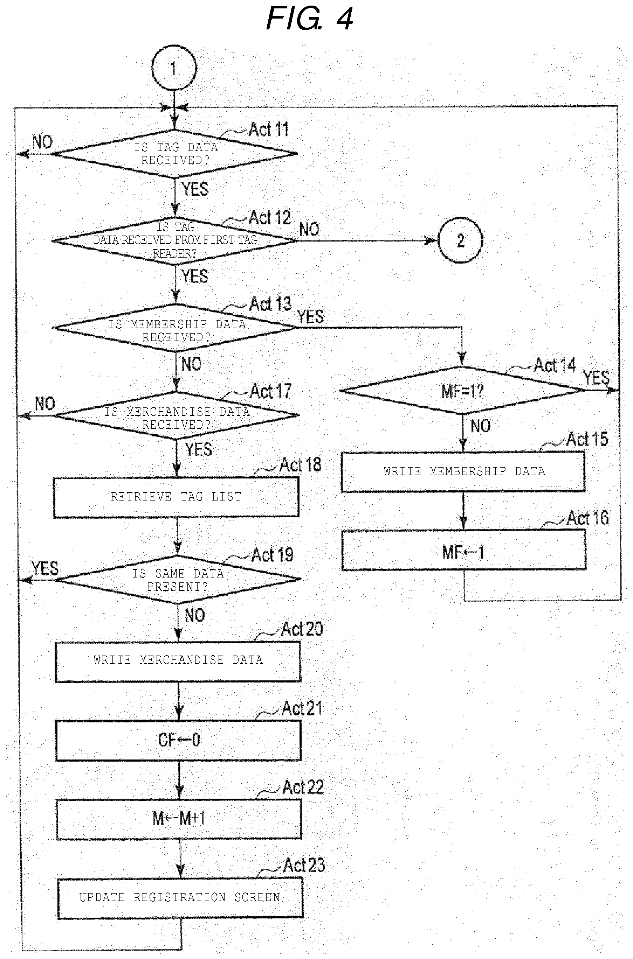

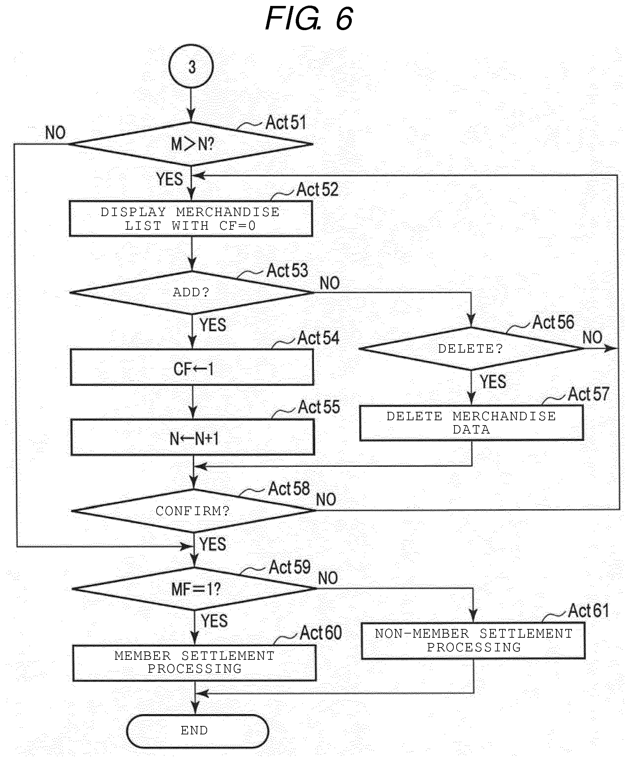

Hereinafter, an example according to an embodiment will be described with reference to the drawings. FIGS. 1 to 12 show a first embodiment. In the present embodiment, a self-checkout apparatus will be described as an example of a settlement processing apparatus. The self-checkout apparatus according to the present embodiment may also be referred to as a self-checkout type merchandise sales data processing apparatus, a point-of-sale (POS) terminal or a self-registration apparatus. Further, in the present embodiment, it is assumed that settlement is performed with respect to merchandise having different RFID tags storing tag data. The tag data includes a unique tag code and a flag which can indicate two states: ON and OFF. The RFID tag receives a radio signal which requests transmission of the tag data, and in response, transmits the stored tag data in a wireless manner. In addition, the RFID tag receives a radio signal which requests setting the flag to ON, and in response, sets the flag included in the stored tag data to ON. In the present embodiment, the flag included in the tag data is used as a settlement flag for identifying whether or not settlement is completed. The flag is in an OFF state when the merchandise having the RFID tag is attached is displayed in a shop or the like.

FIG. 1 is a perspective view illustrating a plurality (here, three) of self-checkout apparatuses 100 according to the present embodiment, arranged side by side. One self-checkout apparatus 100 may be provided for use, or four or more self-checkout apparatuses 100 may be arranged in parallel for use. The three self-checkout apparatuses 100 each have the same configuration. Thus, here, a configuration of one self-checkout apparatus 100 will be described. The same reference numerals are given to the same portions of the other self-checkout apparatuses 100, and description thereof will be omitted.

The self-checkout apparatus 100 includes a housing 1, a touch panel (which is an example of a display unit) 2, a card reader 4, and a receipt output port 5. The housing 1 may be formed in a box shape by combining a member made of a metallic material and a member made of a resin material. A work table 6 is provided on the upper front surface side of the housing 1. A monitor table 7 is formed on the rear wall surface of the work table 6. The touch panel 2 is provided on the monitor table 7.

Two holding areas (a first holding area 6a and a second holding area 6b) are provided on the work table 6 next to each other. A partition wall 8 is provided between the first holding area 6a and the second holding area 6b. In addition, a right wall portion 9a is provided on the right surface (in FIG. 1) of the first holding area 6a. Similarly, a left wall portion 9b is provided on the left surface (in FIG. 1) of the second holding area 6b. Then, in the first holding area 6a, a first work space 11a is formed between a horizontal surface 10a, the partition wall 8, the right wall portion 9a, and the wall surface of the monitor table 7. In addition, in the second holding area 6b, a second work space 11b is formed between a horizontal surface 10b, the partition wall 8, the left wall portion 9b, and the wall surface of the monitor table 7.

For example, a merchandise basket (which is an example of a first merchandise storage body) 12 in which, for example, merchandise that has not been registered is stored is placed in the first work space 11a on the first holding area 6a. A shopping bag (which is an example of a second merchandise storage body) 13 for storing, for example, purchased merchandise (i.e., merchandise that has been registered) is placed in the second work space 11b on the second holding area 6b.

Further, in the second holding area 6b, right and left guide bars 14 protrude from the upper portion of the wall surface of the monitor table 7 towards the front surface. The guide bars 14 are arranged in parallel in the horizontal direction. A plurality of shopping bags 13 are stretched across the guide bars 14. The shopping bags 13 are stacked on the rear side of the second holding area 6b in a folded state. In use, the shopping bag 13 at the foremost position is pulled forward so as to be expanded and opened.

In the first holding area 6a, a first RFID antenna (which is an example of afirst radio tag reader) 15 is mounted on the horizontal surface 10a and on the wall of the monitor table 7. The first RFID antenna 15 reads information from a radio tag which stores identification information, from merchandise in the merchandise basket 12.

In the second holding area 6b, a second RFID antenna (which is an example of a second radio tag reader) 16 is mounted on the wall of the monitor table 7. The second RFID antenna 16 reads information from a radio tag on merchandise which is put in the shopping bag 13. A shielding plate such as a metal plate may be provided on the partition wall 8 to partition the areas in which the radio tags are read by the first RFID antenna 15 and the second RFID antenna 16.

The touch panel 2 is mounted on the upper portion of the housing 1. The touch panel 2 displays an arbitrary image. The touch panel 2 receives an operation input by an operator. Further, the touch panel 2 includes the card reader 4. A non-contact type credit card or the like may be handled by the card reader 4. The receipt output port 5 is made of a metallic material or a resin material, and is attached, for example, to the lower side of the work table 6 on the front surface of the housing 1. The receipt output port 5 is an opening for discharging a receipt to the outside of the housing 1.

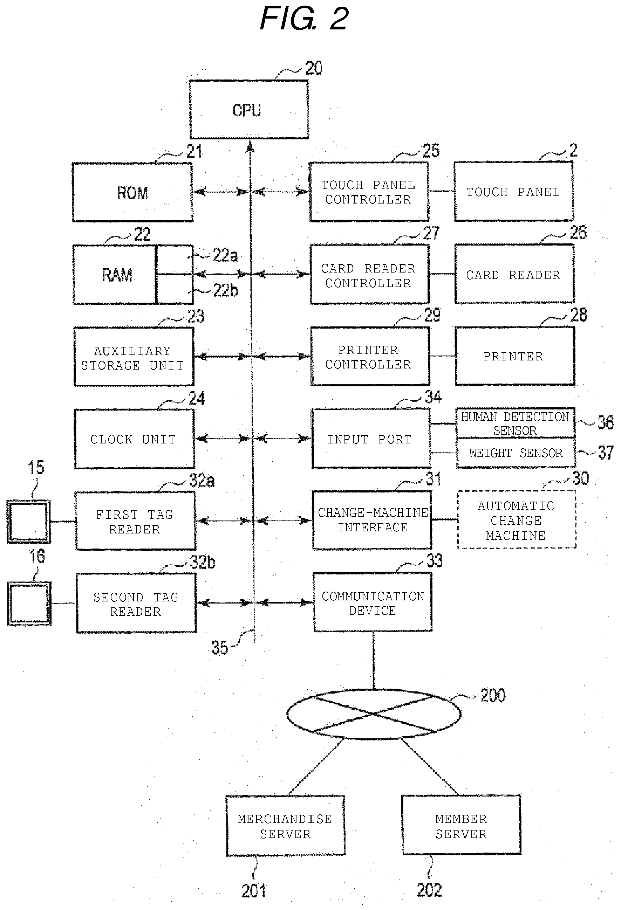

FIG. 2 is a block diagram of the self-checkout apparatus 100. In FIG. 2, the same reference numerals are given to the same portions as those illustrated in FIG. 1, and a detailed description thereof will be omitted.

The self-checkout apparatus 100 further includes a central processing unit (CPU) 20, a read-only memory (ROM) 21, a random access memory (RAM) 22, an auxiliary memory unit 23, a clock unit 24, a touch panel controller 25, a card reader 26, a card reader controller 27, a printer 28, a printer controller 29, an automatic change machine 30, a change-machine interface 31, a first tag reader 32a, a second tag reader 32b, a communication device 33, and an input port 34. The CPU 20, the ROM 21, the RAM 22, the auxiliary memory unit 23, the clock unit 24, the touch panel controller 25, the card reader controller 27, the printer controller 29, the change-machine interface 31, the communication device 33, and the input port 34 are inter-connected via a bus line 35. The CPU 20, the ROM 21, the RAM 22, the auxiliary memory unit 23, the clock unit 24, the touch panel controller 25, the card reader 26, the card reader controller 27, the printer 28, the printer controller 29, the change-machine interface 31, the communication device 33, and the input port 34 are typically provided inside the housing 1. The automatic change machine 30 is normally provided outside the housing 1. The automatic change machine 30 is externally attached to the housing 1 via the change-machine interface 31 of the housing 1 as necessary. Further, a human detection sensor 36 which is attached to, for example, the housing 1 and a weight sensor 37 which detects the weight of the merchandise basket 12 (sum of the weight of the merchandise basket 12 itself and the weight of merchandise in the merchandise basket 12) placed on the first holding area 6a are connected to the input port 34.

The CPU 20, the ROM 21, the RAM 22, and the auxiliary memory unit 23 are connected to each other via the bus line 35, and may be provided as a computer.

The CPU 20 corresponds to the main processor of the computer. The CPU 20 controls each unit to realize various operations as the self-checkout apparatus 100 based on an operating system, middleware, and application programs stored in the ROM 21 and the auxiliary memory unit 23.

The ROM 21 corresponds to the non-volatile memory of the computer. The ROM 21 stores the operating system. In some cases, the ROM 21 may store the middleware or the application programs. Further, in some cases, the ROM 21 may store data to be referred to when the CPU 20 performs various processing.

The RAM 22 corresponds to the volatile memory of the computer. The RAM 22 stores data to be referred to when the CPU 20 performs various processing. Further, the RAM 22 is used as a so-called work area for storing data which is temporarily used when the CPU 20 performs various processing. A portion of the memory area of the RAM 22 is used as a tag list area 22a and a write list area 22b. In the tag list area 22a, a read list, which is a list of tag data read from the RFID tag by the first RFID antenna 15 so as to determine merchandise as an object to be settled in the merchandise basket 12, is stored.

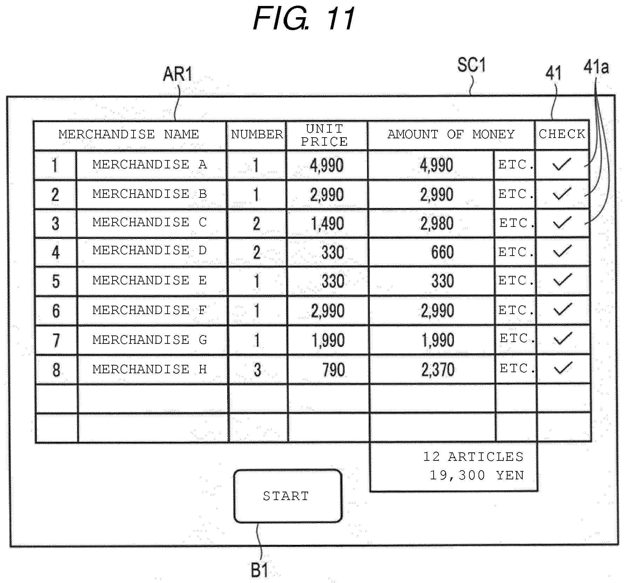

FIG. 11 illustrates a registration screen SC1 as an example of a read list displayed on the screen of the touch panel 2. The registration screen SC1 includes an area AR1 for displaying a list of merchandise and a button B1.

The tag data is transmitted from the RFID tag attached to merchandise and is read. The merchandise name, the number, the unit price, the amount of money, the consumption tax category, the check column 41, and the like of the merchandise are displayed in the area AR1 on the registration screen SC1. The button B1 is a graphical user interface (GUI) touched by, for example, a customer who requests starting to move merchandise one by one from the merchandise basket 12 to the shopping bag 13, or a customer who requests starting of settlement.

In the area AR1 of FIG. 11, although information of twelve articles of merchandise is represented, the information is sequentially added and the registration screen is updated each time the corresponding tag data is read. Specifically, the registration screen does not represent any information of merchandise for which the tag data has not been read. The CPU 20 updates the registration screen so as to represent information of the merchandise name "merchandise A" as the first-received tag data. The CPU 20 updates the registration screen so as to represent information of the merchandise name "merchandise B" as the second-received tag data. The CPU 20 repeats the same updating, thereby updating the registration screen SC1 illustrated in FIG. 11 based on the received tag data of the twelve articles of merchandise. Thus, the registration screen is sequentially updated so as to represent progress of reading the tag data. At this time, the check column 41 is created at the same time. In the check column 41, a blank cell 41a is formed at a position corresponding to the merchandise name.

At the initial stage (before starting to move the merchandise one by one from the merchandise basket 12 to the shopping bag 13), the cell 41a in the check column 41 is held in a blank state, for example. After starting to move the merchandise one by one from the merchandise basket 12 to the shopping bag 13, a check such as a mark is displayed in the check column 41 based on the tag data read from the RFID tag by the second RFID antenna 16. The display format of the merchandise displayed on the registration screen may not necessarily include the check column 41. For example, characters of the checked merchandise may be changed from black to red or inversely displayed. That is, the display format of the merchandise is changed from when the tag data is first read by the first RFID antenna to when the tag data is later read by the second RFID antenna.

The write list area 22b, based on the tag data read from the RFID tag by the second RFID antenna 16, includes a write list, which is a list of tag data read from the RFID tag for processing of displaying a check such as a mark in the check column 41 of the merchandise on the registration screen SC1. Although not illustrated, a portion of the memory area of the RAM 22 is used as a merchandise list area.

The auxiliary memory unit 23 corresponds to an auxiliary memory of the computer. The auxiliary memory unit 23 is, for example, a hard disk drive, a solid state drive (SSD), or the like, and holds data which is used in various processing by the CPU 20 and data which is generated in processing by the CPU 20. Further, in some cases, the auxiliary memory unit 23 may store the middleware or the application programs.

The clock unit 24 regularly performs a clocking operation and generates date and time information representing the date and time.

The touch panel controller 25 controls the display on the touch panel 2 under the control of the CPU 20. Further, the touch panel controller 25 transfers information in accordance with a user operation on the touch panel 2, to the CPU 20 via, for example, the RAM 22.

The card reader 26 reads card information recorded on the card by the non-contact type card reader 4. The card may include a settlement card such as a credit card, a debit card, or a prepaid card, a point card, or the like. Further, the card reader 26 may write information of the card.

The card reader controller 27 controls the operation of the card reader 26 under the control of the CPU 20, and transfers the card information output from the card reader 26 to the CPU 20 via the RAM 22.

The printer 28 may be, for example, a thermal printer, a dot impact printer, or the like, and prints a receipt. The printer 28 discharges a receipt from the receipt output port 5.

The printer controller 29 controls the operation of the printer 28 under the control of the CPU 20.

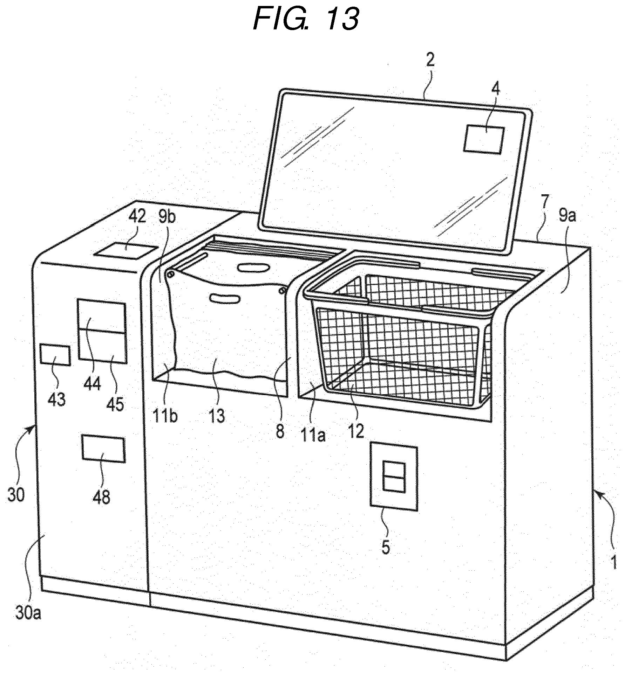

As illustrated in FIG. 13, the automatic change machine 30 includes a coin insertion port 42, a coin discharge port 43, a bill insertion port 44, a bill discharge port 45, and a receipt output port 48. The coin insertion port 42 is an opening for inserting a coin into the inside of the housing 30a of the automatic change machine 30. The coin discharge port 43 is an opening for discharging a coin to the outside of the housing 30a. The bill insertion port 44 is an opening for inserting a bill into the inside of the housing 30a. The bill discharge port 45 is an opening for discharging a bill to the outside of the housing 30a. The automatic change machine 30 receives the coins and the bills inserted from the coin insertion port 42 and the bill insertion port 44, and discharges coins and bills as change from the coin discharge port 43 and the bill discharge port 45 as necessary.

The change-machine interface 31 controls the operation of the automatic change machine 30 under the control of the CPU 20.

The first tag reader 32a may include the first RFID antenna 15, a transmission circuit, and a receiving circuit. The first tag reader 32a has a tag reading space (the first work space 11a on the first holding area 6a) as a reading range, and reads tag data from a RFID tag which exists in the tag reading space.

The second tag reader 32b may include the second RFID antenna 16, a transmission circuit, and a receiving circuit. The second tag reader 32b has a tag reading space (the second work space 11b on the second holding area 6b) as a reading range, and reads tag data from a RFID tag which exists in the tag reading space.

The communication device 33 communicates with other devices such as a merchandise server 201 and a member server 202 via communication network 200 such as a local area network (LAN) or the Internet.

One of the application programs stored in the ROM 21 or the auxiliary memory unit 23 is a control program for causing the CPU 20 to execute control processing to be described later. The control program is typically stored in the ROM 21 or the auxiliary memory unit 23 when installing the self-checkout apparatus 100. However, the self-checkout apparatus 100 may be installed in a state where the control program is not stored in the ROM 21 or the auxiliary memory unit 23, and the control program may be written in a separately-installed auxiliary memory unit 23 of the self-checkout apparatus 100, after being recorded on a removable recording medium such as a magnetic disk, a magneto-optical disk, an optical disk, or a semiconductor memory, or being installed via a network.

Next, the operation of the self-checkout apparatus 100 configured as described above will be described.

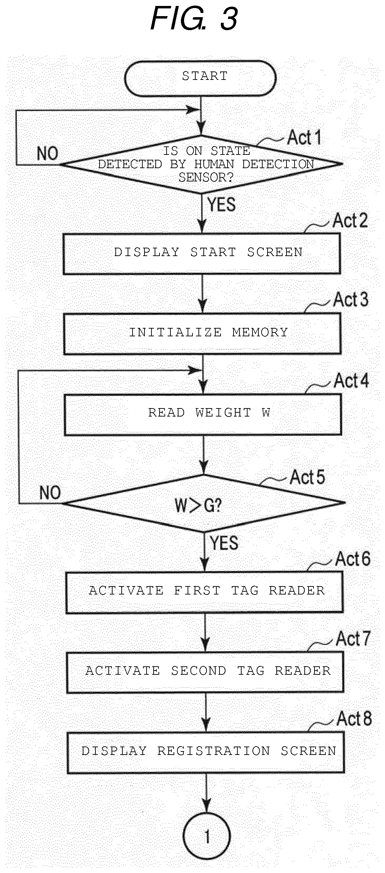

FIGS. 3 to 6 are flowcharts illustrating an example sequence of operations of the self-checkout apparatus

The CPU 20 executes control processing illustrated in FIGS. 3 to 6 according to the control program stored in the ROM 21 or the auxiliary memory unit 23. The contents of the processing to be described below are merely described as an example, and various processing capable of obtaining similar results can be appropriately used.

When the CPU 20 is activated according to, for example, turn-on of a power switch (not illustrated) by a manager, the CPU 20 starts the control processing illustrated in FIGS. 3 to 6.

In Act 1, when the human detection sensor 36 detects an ON state, it is detected that there is a customer in front of the housing 1 of the self-checkout apparatus 100. Subsequently, in Act 2, the start screen is displayed on the touch panel 2. The start screen on the touch panel 2 may be generated in advance as a screen or the like showing guidance for a customer who wants to perform a checkout procedure using the self-checkout apparatus 100.

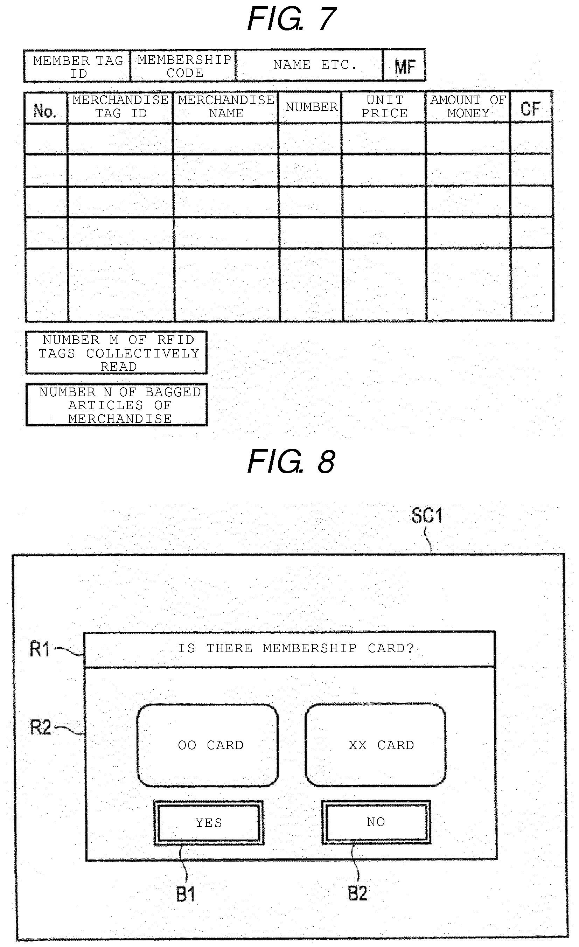

In Act 3, the CPU 20 initializes the memory. This initialization includes clearing the tag list area 22a, the write list area 22b, and the merchandise list area. FIG. 7 illustrates an example of a main data table formed in the RAM 22.

In Act 4, the CPU 20 reads the total weight W of the merchandise basket 12 (sum of the weight G of the merchandise basket 12 itself and the weight of the merchandise in the merchandise basket 12) placed on the first holding area 6a, based on the detection data from the weight sensor 37.

In Act 5, the CPU 20 confirms whether or not the total weight W of the merchandise basket 12 is heavier than the weight G of the merchandise basket 12 itself. In a case where W>G is not satisfied, the CPU 20 determines that the confirmation result is NO, and repeats the operation of returning to Act 4.

That is, in Act 5, the CPU 20 waits until it is confirmed that W>G. When it is confirmed that W>G, the CPU 20 determines that the confirmation result is YES, and proceeds to Act 6.

In Act 6, the CPU 20 activates the first tag reader 32a. When the first tag reader 32a is activated, the first RFID antenna 15 reads the information of the radio tag, which stores the identification information of the merchandise in the merchandise basket 12 in the first work space 11a on the first holding area 6a. At this time, the tag data is collectively read from the RFID tags which exist in the merchandise basket 12. Each tag data which is read is provided to the CPU 20.

Thereafter, the CPU 20 proceeds to Act 7. In Act 7, the CPU 20 activates the second tag reader 32b. Subsequently, the CPU 20 proceeds to Act 8. In Act 8, the CPU 20 displays the registration screen with the check column 41 (illustrated in FIG. 11) on the touch panel 2.

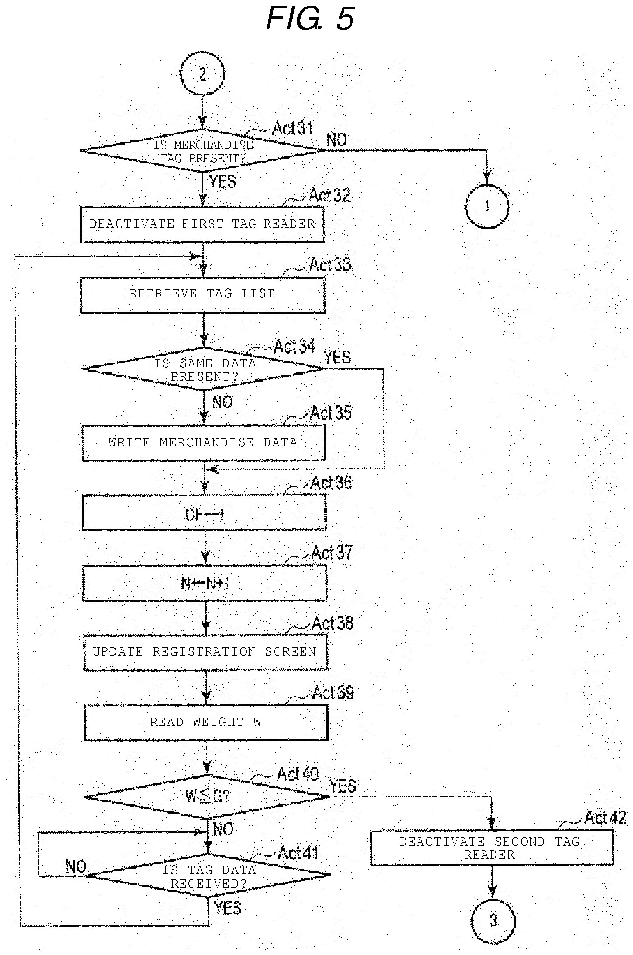

In Act 11, the CPU 20 determines whether or not tag data is received. When it is determined that tag data is received, the CPU 20 proceeds to Act 12. Subsequently, in Act 12, the CPU 20 determines whether or not the tag data is received from the first tag reader 32a. In Act 12, when it is determined that the tag data is received from the first tag reader 32a, the CPU 20 proceeds to Act 13. In Act 12, when it is determined that the tag data is not received from the first tag reader 32a, the CPU 20 proceeds to Act 31 illustrated in FIG. 5.

In Act 13, the CPU 20 determines whether or not membership data is received. When it is determined that membership data is not received, the CPU 20 proceeds to Act 17. In Act 13, when it is determined that membership data is received, the CPU 20 proceeds to Act 14.

In Act 14, the CPU 20 determines whether or not MF=1. When it is determined that MF=1, the process returns to Act 11. In Act 14, when it is determined that MF≠1, the process proceeds to Act 15. In Act 15, the CPU 20 writes the member data in the data table illustrated in FIG. 7, and proceeds to Act 16. In Act 16, the CPU 20 sets MF to 1(MF←1), and returns to Act 11. Accordingly, the member data is specified.

In Act 17, the CPU 20 determines whether or not merchandise data is received. When it is determined that merchandise data is received, the CPU 20 proceeds to Act 18. In Act 17, when it is determined that merchandise data is not received, the CPU 20 returns to Act 11.

In Act 18, the CPU 20 retrieves the tag list. Subsequently, in Act 19, the CPU 20 determines whether or not the same data is present in the tag list. In Act 19, when it is determined that the same data is received, the CPU 20 returns to Act 11. In Act 19, when it is determined that the same data is not received, the CPU 20 proceeds to Act 20.

In Act 20, the CPU 20 writes the merchandise data. Subsequently, in Act 21, the CPU 20 sets CF to 0 (CF←0), and proceeds to Act 22. In Act 22, the CPU 20 sets M to M+1 (M←M+1), and proceeds to Act 23. Here, M is the total number of the RFID tags which have been collectively read. In Act 23, the CPU 20 updates the registration screen. Accordingly, the registration screen SC1 illustrated in FIG. 11 is displayed.

Next, in Act 31 of FIG. 5, the CPU 20 determines whether or not a merchandise tag is present. In Act 31, when it is determined that a merchandise tag is present, the CPU 20 proceeds to Act 32. In Act 31, when it is determined that a merchandise tag is not present, the CPU 20 returns to Act 11.

In Act 32, the CPU 20 deactivates the first tag reader 32a. At this point, the operation of collectively reading the tag data from the RFID tags in the merchandise basket 12 by the first RFID antenna 15, is ended. At this time, an instruction screen for instructing a customer to start a bagging operation is displayed on the touch panel 2. Thus, the customer opens the shopping bag 13 on the second holding area 6b, and starts a bagging operation of moving the merchandise in the merchandise basket 12 from the first holding area 6a one by one into the shopping bag 13 on the second holding area 6b. That is, in the bagging operation, the merchandise is moved one by one from the merchandise basket 12 to the shopping bag 13. At this time, each time one item of merchandise is moved, a mark is added to the blank cell 41a of the check column 41 of the registration screen, based on the tag data read from the RFID tag by the second RFID antenna 16.

Next, in Act 33, the CPU 20 retrieves the tag list. Subsequently, in Act 34, the CPU 20 determines whether or not the same data is present in the tag list. In Act 34, when it is determined that the same data is received, the CPU 20 proceeds to Act 36. In Act 34, when it is not determined that the same data is received, the CPU 20 proceeds to Act 35.

In Act 35, the CPU 20 writes the merchandise data. Subsequently, in Act 36, the CPU 20 sets CF to 1 (CF←1), and proceeds to Act 37. In Act 37, the CPU 20 sets N to N+1 (N←N+1), and proceeds to Act 38. Here, N is the total number of bagged articles of merchandise. In Act 38, the CPU 20 updates the registration screen.

Next, in Act 39, the CPU 20 reads the weight W of the merchandise basket 12. Subsequently, in Act 40, the CPU 20 confirms whether or not W is less than or equal to G. In a case where W≤G is not satisfied, the CPU 20 determines that the confirmation result is NO, and proceeds to Act 41. At this time, in a case where W≤G is satisfied, the CPU 20 determines that the confirmation result is YES, and proceeds to Act 42.

In Act 41, the CPU 20 determines whether or not tag data is received. When it is determined that tag data is received, the CPU 20 returns to Act 33, and repeats the processing of Act 33 to Act 41.

Further, in Act 42, the CPU 20 deactivates the second tag reader 32b. Subsequently, in Act 51, the CPU 20 confirms whether or not M>N. In a case where M>N is not satisfied, the CPU 20 determines that the confirmation result is NO, and proceeds to Act 59. At this time, in a case where it is confirmed that M>N, the CPU 20 determines that the confirmation result is YES, and proceeds to Act 52.

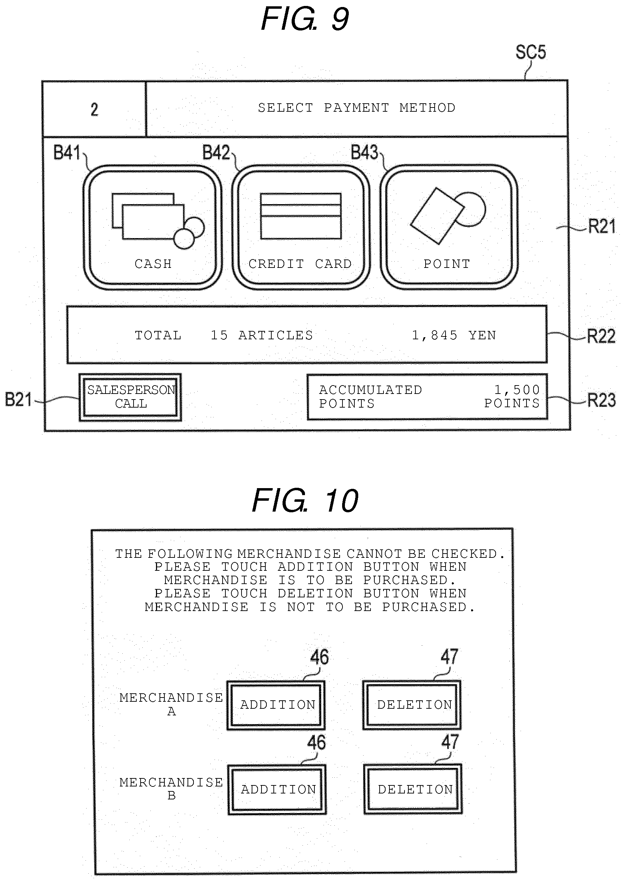

In Act 52, the CPU 20 displays the merchandise list with CF=0. Next, in Act 53, the CPU 20 determines whether or not merchandise is added. In Act 53, a purchase confirmation inquiry screen is displayed on the touch panel 2. FIG. 10 illustrates an example purchase confirmation inquiry screen. Here, merchandise names that cannot be checked in the area in which a radio tag is read by the first RFID antenna 15 and the area in which a radio tag is read by the second RFID antenna 16, "addition" buttons 46, and "deletion" buttons 47 are displayed.

In Act 53, the CPU 20 determines whether or not merchandise is added. At this time, when it is determined that merchandise is added, the CPU 20 proceeds to Act 54. In Act 54, the CPU 20 sets CF to 1 (CF←1), and proceeds to Act 55. In Act 55, the CPU 20 sets N to N+1 (N←N+1), and proceeds to Act 58.

Further, in Act 53, when it is determined that merchandise is not added, the CPU 20 proceeds to Act 56. In Act 56, the CPU 20 determines whether or not merchandise is deleted. At this time, when it is determined that merchandise is deleted, the CPU 20 proceeds to Act 57. In Act 57, the CPU 20 deletes the merchandise data, and proceeds to Act 58.

In Act 58, the CPU 20 determines whether or not purchase is confirmed. In Act 58, when it is determined that purchase is not confirmed, the CPU 20 returns to Act 52. In Act 58, when it is determined that purchase is confirmed, the CPU 20 proceeds to Act 59.

In Act 59, the CPU 20 determines whether or not MF=1. When it is determined that MF=1, the process proceeds to Act 60. In Act 60, the CPU 20 performs membership settlement processing, and ends the process. Further, in Act 59, when it is not determined that MF=1, the process proceeds to Act 61. In Act 61, the CPU 20 performs non-membership settlement processing, and ends the process.

FIG. 8 illustrates an example of a card inquiry screen displayed on the touch panel 2 of the self-checkout apparatus 100. As illustrated in FIG. 8, the card inquiry screen SC1 includes display areas R1 and R2 and buttons B1 and B2. In the display area R1, a message inquiring the presence or absence of a membership card is displayed. In the display area R2, an image of an available membership card is displayed. The button B1 is for specifying that the purchase is a commercial transaction with a shopper who holds a membership card displayed in the display area R2. The button B2 is for specifying that the purchase is a commercial transaction with a shopper who does not hold a membership card displayed in the display area R2.

In the present embodiment, members of a membership service can purchase merchandise, for example, at a reduced unit price. Benefits of the membership service are provided only to a member who holds a membership card. Thus, in a case where a customer is a member but forgets his or her membership card, the membership service is not provided, and the customer has to purchase merchandise at a normal unit price.

The card inquiry screen SC1 inquires whether or not a shopper who requests registration of the purchased merchandise holds a membership card. When the shopper presents a membership card, the button B1 is touched, and data of the membership card is read by the card reader 26. On the other hand, in a case where a shopper does not present a membership card, the button B2 is touched.

After displaying the card inquiry screen SC1, the CPU 20 waits until either of the buttons B1 and B2 is touched (Act 13). In a case where it is detected that the button B1 is touched, the CPU 20 determines that the purchase is a commercial transaction by a member (YES in Act 13). In this case, the CPU 20 sets a membership flag of a membership table to "1" (Act 14). Further, the CPU 20 registers a membership number and accumulated points in the membership table. The membership number is information read from the membership card by the card reader 26. The accumulated points are stored in a membership database in association with the membership number.

FIG. 9 illustrates an example settlement screen displayed on the touch panel 2 of the self-checkout apparatus 100. The settlement screen SC4 includes display areas R21, R22, and R23, and a button B21.

In the display area R21, payment method selection buttons B41, B42, and B43 are displayed. In the display area R22, the total number of articles of merchandise and the total amount of money in a total table 33b are displayed. In the display area R23, the accumulated points in a membership table 31b is displayed. The button B21 is designated for calling a salesperson by a shopper.

In a case where the button B21 is touched, a call signal is transmitted from the settlement processing apparatus to a merchandise registration apparatus as a transmission source of the settlement information via LAN. In the merchandise registration apparatus that received the call signal, for example, a call notification screen is displayed on the touch panel 2. In the call notification screen, information indicating the settlement processing apparatus as a transmission source of the call signal is displayed. Therefore, a salesperson can easily recognize reception of a call from a shopper who operates the corresponding settlement processing apparatus.

The selection button B41 is touched by a shopper who selects cash payment. The selection button B42 is touched by a shopper who selects credit card payment. The selection button B43 is touched by a shopper who selects point payment. That is, the first settlement screen SC4 is a screen for a shopper to select any one payment method from cash payment, credit card payment, and point payment.

The shopper who confirms the first settlement screen SC4 selects any one of available payment methods displayed in the display area R21, and touches the corresponding selection button B41, B42, or B43. In the settlement processing apparatus, a payment operation in accordance with the selected payment method is performed.

The CPU 20 displays the settlement screen SC4, and waits until the selection button B41, B42, or B43 is touched. When the selection button B41, B42, or B43 is touched, the CPU 20 determines that a payment method corresponding to the touched selection button B41, B42, or B43 is selected. The CPU 20 executes settlement processing in accordance with the selected payment method. That is, in a case where the selection button B41 is touched, the CPU 20 executes settlement processing for cash payment. In a case where the selection button B42 is touched, the CPU 20 executes settlement processing for credit card payment. In a case where the selection button B43 is touched, the CPU 20 executes settlement processing for point payment using the accumulated points in the membership table.

In this regard, in the case of a membership transaction in which the membership flag is set to "1", in the settlement processing, for example, service points are calculated according to the total amount of money. The service points are transmitted to the database server together with the member number of the membership table, and are accumulated for each member by the member database.

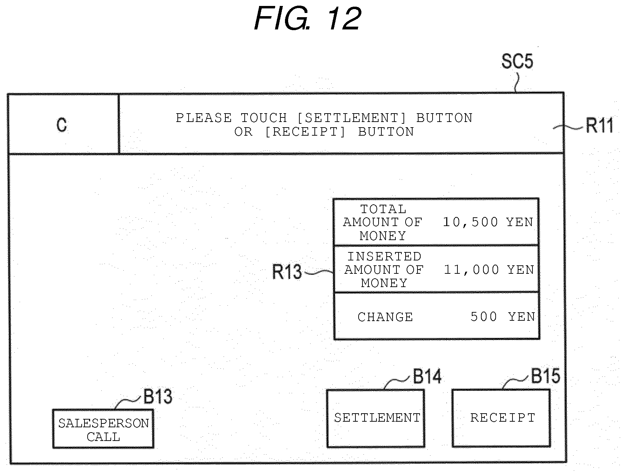

FIG. 12 illustrates an example settlement confirmation screen for cash payment displayed on the touch panel 2 of the self-checkout apparatus 100. The settlement confirmation screen SC5 includes a display area R13 and buttons B14 and B15. In addition, the settlement confirmation screen SC5 includes a display area R11 for displaying operation guidance for shoppers. Further, the settlement confirmation screen SC5 displays a salesperson call button B13 at the same position as that of the settlement screen SC4.

In the display area R13, the total amount of money, the amount of money inserted into the automatic change machine 30, and the change amount are displayed. The button B 14 is designated for a shopper who does not want to receive a receipt to confirm the contents of settlement. The button B 15 is designated for a shopper who wants to receive a receipt to confirm the contents of settlement. In the following description, the button B14 is referred to as a settlement button B14, and the button B15 is referred to as a receipt button B15. In the display area R11, a message prompting a shopper to touch either of the settlement button B14 and the receipt button B15 is displayed.

When the settlement processing is completed, the CPU 20 causes the printer 28 to operate and issue a receipt. After a receipt is issued, the CPU 20 repeats the subsequent processing in the same manner as described above.

The self-checkout apparatus 100 according to the present embodiment includes the first RFID antenna 15 provided on the first holding area 6a of the work table 6, the second RFID antenna 16 provided on the second holding area 6b, and the CPU 20 as a purchased-merchandise detection unit. The merchandise basket 12 in which merchandise before registration is stored is placed on the first holding area 6a, and the shopping bag 13 for storing the purchased merchandise is placed on the second holding area 6b. The first RFID antenna 15 collectively reads information of radio tags which store identification information of merchandise in the merchandise basket 12 on the first holding area 6a. The second RFID antenna 16 reads information of a radio tag of merchandise which is put one by one from the merchandise basket 12 on the first holding area 6a into the shopping bag 13 on the second holding area 6b. Further, the CPU 20 as a purchased-merchandise detection unit detects all of the purchased merchandise stored in the shopping bag 13 based on the read information by the first RFID antenna 15 and the read information by the second RFID antenna 16. Accordingly, for example, even in a case where the purchased merchandise in the merchandise basket 12 is omitted from reading by the first RFID antenna 15, in the operation of putting the purchased merchandise one by one from the merchandise basket 12 on the first holding area 6a into the shopping bag 13 on the second holding area 6b, the purchased merchandise can be read by the second RFID antenna 16 without omission. Therefore, even in a case where multiple radio tags are in a communication range of the tag reader, it is possible to reliably detect all of the merchandise.

In addition, the self-checkout apparatus 100 includes the touch panel 2. A read list of merchandise in the merchandise basket 12 which have been read by the first RFID antenna 15 is displayed on the touch panel 2. Further, on the registration screen of the touch panel 2, the read list, which is a list of tag data collectively read from the RFID tags by the first RFID antenna 15 so as to determine a plurality of merchandise to be settled in the merchandise basket 12 on the first holding area 6a, and the check column 41 are simultaneously displayed. The read list is checked such as displaying a mark in the check column 41, based on the read information which is read by the second RFID antenna 16. Thus, each time a customer moves and puts merchandise one by one from the merchandise basket 12 to the shopping bag 13, it is possible to confirm reading of the merchandise by simply viewing the screen display of the touch panel 2. Therefore, it is possible to reduce a possibility that purchased merchandise to be put into the shopping bag 13 is omitted.

In the present embodiment, although a configuration in which the shopping bag 13 is disposed on the second holding area 6b is adopted, a configuration in which a second merchandise basket is disposed instead of the shopping bag 13 may be adopted. The second merchandise basket with a different structure in color and shape from that of the merchandise basket 12 on the first holding area 6a is used, and thus the second merchandise basket can be distinguished from the merchandise basket 12 that is used before settlement. In addition, even when an electronic tag is used in place of the RFID tag, an embodiment can be implemented in the same manner as in the above-described embodiment.

Further, in the present embodiment, although the merchandise basket 12 and the shopping bag 13 are disposed on the work table 6, an auxiliary table or the like for further expanding the work space may be provided on the work table 6. In this case, it is possible to secure a work space for performing work such as folding merchandise such as clothing.

Furthermore, in the present embodiment, although a configuration in which the presence or absence of a customer is detected by the human detection sensor 36 is adopted, a configuration in which a membership card held by the customer is detected by the first RFID antenna 15 or the second RFID antenna 16 at the same time as detecting the presence or absence of the customer, may be adopted. In this case, when there is a customer in front of the self-checkout apparatus 100, it is possible to identify whether the customer is a member with a membership card or a non-member. Therefore, a guidance screen displayed on the touch panel 2 can be changed depending on whether the customer is a member with a membership card or a non-member. In a case where the customer is a non-member, "Welcome" is displayed on the touch panel 2, and in a case where the customer is a member with a membership card, "Thank you every time" is separately displayed on the touch panel 2. Further, the self-checkout apparatus 100 may further have a function of a scanner, a bar code reader, touch input, and the like.

FIG. 13 is a perspective view illustrating an example self-checkout apparatus 100 according to a second embodiment. The second embodiment is an example in which a detachable automatic change machine 30 is connected to the side of one self-checkout apparatus 100. The detachable automatic change machine 30 is is arranged side by side with the self-checkout apparatus 100. In this case, it is possible to independently provide the self-checkout apparatus 100 capable of handling cash.

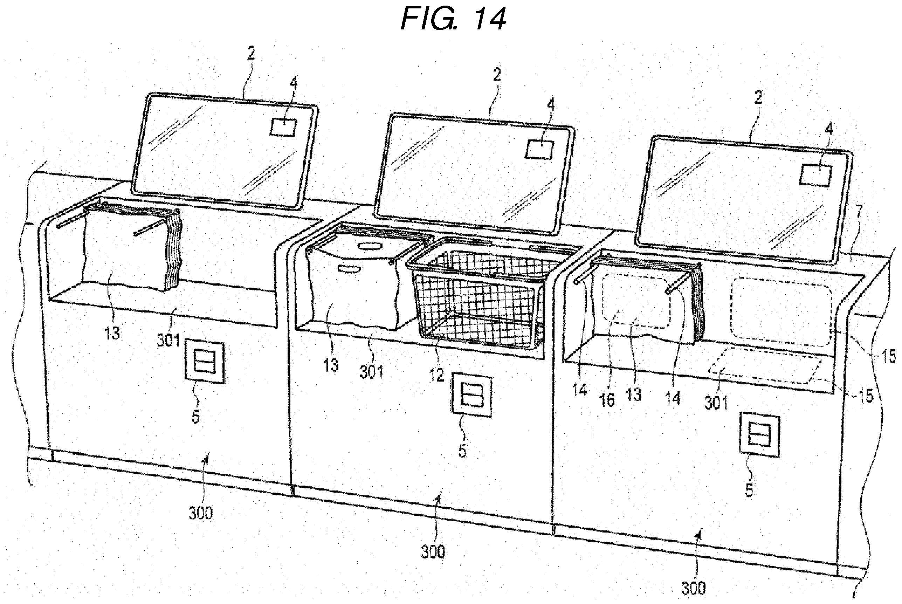

FIG. 14 is a perspective view illustrating an example self-checkout apparatus 300 according to a third embodiment. The self-checkout apparatus 300 according to the third embodiment does not include the partition wall 8 of the self-checkout apparatus 100. In the self-checkout apparatus 300 according to the third embodiment, it is possible to arrange the first holding area 6a on which the merchandise basket 12 before settlement is placed and the second holding area 6b on which the shopping bag 13 is placed, on one flat plate of the work table 6, side by side. Even in this case, the same effect as that of the self-checkout apparatus 100 according to the first embodiment can be obtained.

According to the embodiments, it is possible to provide a settlement processing apparatus capable of detecting all merchandise even in a case where there are a plurality of radio tags in the communication range of a tag reader.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A settlement processing apparatus, comprising:
a work table including a first holding area on which a first merchandise storage body is placed and a second holding area on which a second merchandise storage body is placed;
a first radio tag reader positioned in the first holding area and configured to read information from a radio tag affixed to an item of merchandise held in the first merchandise storage body;
a second radio tag reader positioned in the second holding area and configured to read information from a radio tag affixed to an item of merchandise held in the second merchandise storage body;
a display unit; and
a processor configured to:
determine whether a radio tag affixed to an item of merchandise read by the second radio tag reader was already read by the first radio tag reader,
generate a list of merchandise held in the second merchandise storage body based on the read information obtained by the first and second radio tag readers, and the determination of whether a radio tag affixed to an item of merchandise read by the second radio tag reader was already read by the first radio tag reader, and
control the display unit to display the generated list.

2. The apparatus according to claim 1, wherein
the first merchandise storage body is a first merchandise basket, and
the second merchandise storage body is a second merchandise basket.

3. The apparatus according to claim 1 or 2, further comprising:
a partition wall positioned on the work table between the first holding area and the second holding area.

4. The apparatus according to any one of claims 1 to 3, wherein
the generated list includes a check box for each item of merchandise for which the corresponding radio tag is read by the first radio tag reader, and
each check box is checked if the corresponding radio tag is read by the second radio tag reader.

5. The apparatus according to any one of claims 1 to 4, further comprising:
a cash processing unit configured to perform cash payment settlement with respect to the items of merchandise included in the generated list, the cash processing unit being detachably connected to the work table.

6. A settlement processing method comprising the steps of:
placing a first merchandise storage body with at least one item of merchandise therein on a first holding area of a working table;
with a first radio tag reader positioned in the first holding area, reading information from a radio tag affixed to an item of merchandise held in the first merchandise storage body on which a first merchandise storage body is placed;
moving each of the at least one item of merchandise from the first merchandise storage body to a second merchandise body positioned on a second holding area of the working table;
with a second radio tag reader positioned in the second holding area, reading information from a radio tag affixed to an item of merchandise held in the second merchandise storage body;
determining whether a radio tag affixed to an item of merchandise read by the second radio tag reader was already read by the first radio tag reader;
generating a list of merchandise held in the second merchandise storage body based on the read information obtained by the first and second radio tag readers, and the determination of whether a radio tag affixed to an item of merchandise read by the second radio tag reader was already read by the first radio tag reader; and
controlling a display unit to display the generated list.

7. The method according to claim 6, wherein
a partition wall is positioned on the work table between the first holding area and the second holding area.

8. The method according to claim 6 or 7, wherein
the generated list includes a check box for each item of merchandise for which the corresponding radio tag is read by the first radio tag reader, and
each check box is checked if the corresponding radio tag is read by the second radio tag reader.

9. The method according to any one of claims 6 to 8, further comprising:
performing cash payment settlement with respect to the items of merchandise included in the generated list with a cash processing unit detachably connected to the work table.

10. A settlement processing method comprising:
with a first radio tag reader positioned in a first holding area of a working table, reading information from a radio tag affixed to an item of merchandise held in the first holding area;
with a second radio tag reader positioned in a second holding area of the working table, reading information from a radio tag affixed to an item of merchandise held in the second holding area;
determining whether a radio tag affixed to an item of merchandise read by the second radio tag reader was already read by the first radio tag reader;
generating a list of merchandise held in the second holding area based on the read information obtained by the first and second radio tag readers, and the determination of whether a radio tag affixed to an item of merchandise read by the second radio tag reader was already read by the first radio tag reader; and
controlling a display unit to display the generated list.

11. The method according to claim 10, wherein
a partition wall is positioned on the work table between the first holding area and the second holding area.

12. The method according to claim 10 or 11, wherein
the generated list includes a check box for each item of merchandise for which the corresponding radio tag is read by the first radio tag reader, and
each check box is checked if the corresponding radio tag is read by the second radio tag reader.

13. The method according to any one of claims 10 to 12, further comprising:
performing cash payment settlement with respect to the items of merchandise included in the generated list with a cash processing unit detachably connected to the work table.

14. The method according to claim 13, further comprising:
determining whether a member identification corresponding to a membership is input; and
performing payment settlement with respect to the items of merchandise included in the generated list, wherein the payment settlement includes applying a membership benefit if a member identification corresponding to a membership is determined to have been input.

15. The method according to any one of claims 10 to 14, further comprising:
measuring a total weight on the first holding area;
determining whether the measured total weight is less than or equal to a predetermined weight; and
if the measured total weight is less than or equal to the predetermined weight, deactivating the second radio tag reader.
